# EUROPEAN PATENT SPECIFICATION

(11) **EP 2 506 471 B1**
(45) Date of publication and mention of the grant of the patent: **31.07.2013**
(21) Application number: 11305353.2
(22) Date of filing: 29.03.2011
(51) Int. Cl.: H04J 3/16, H04Q 11/04, H04Q 3/68

(54) **Network node for switching traffic signals in a transport network**
Netzwerkknoten zum Schalten von Verkehrssignalen in einem Transportnetzwerk
Noeud de réseau pour commutation des signaux de trafic dans un réseau de transport

(43) Date of publication of application: 03.10.2012
(73) Proprietor: Alcatel Lucent, 75007 Paris (FR)
(72) Inventor: Koch, Werner, 71282, Hemmingen (DE)
(74) Representative: Mildner, Volker

(56) References cited:
- EP-A1- 1 585 358
- EP-A1- 1 596 612
- WO-A1-2006/115736

## Description

### Field of the Invention

The present invention relates to the field of telecommunications and more particularly to a network node for switching traffic signals in a transport network.

### Background of the Invention

Optical transmission networks mostly rely on circuit switching technology using time-division multiplexing (TDM). Traffic signals are mapped as payload data into multiplexing units of fixed length and are transported within predefined timeslots of framed transport signals. Different telecommunications standards exist today for optical transmission networks. One is the well known Synchronous Digital Hierarchy (SDH) defined in ITU-T G.707, where transport frames are termed Synchronous Transport Modules (STM) and the basic multiplexing units are termed Virtual Containers-N (VC-N) of size N (N=4, 3, 2, 12, 11). A more recent technology is the Optical Transport Network (OTN), which is defined in ITU-T G.709. Multiplexing units are termed here Optical Transport Units-k (OTU-k), where k can be 0, 1, 2, 3, or 4, defining the size of the OTU-k.

Connections in optical transmission networks are typically established on a semi-permanent basis over timescales of days to months rather than minutes to hours. Network equipment for setting up connections include so-called digital crossconnects. A digital crossconnect has a large number of input/output ports interconnected through a configurable switch matrix. Since transmission networks rely on TDM, the switch matrix must be capable of switching individual multiplexing units in time and space domain.

The ever increasing traffic amount in the networks has led to a demand for larger and higher integrated crossconnect systems. However, the maximum capacity of such crossconnect systems reaches limits in terms of size and integration, which are owed to the architecture of its switch matrix.

A traditional matrix architecture is a square matrix, where N inputs and outputs are connected through a N _{×} N square matrix. The size of the square matrix grows with the square of the number of ports.

A known network node is described WO 2006/115736 A1 (LUCENT TECHNOLOGIES), 2 November 2006.

Another known matrix architecture is referred to as a Clos matrix (named after Bell Labs research scientist Charles Clos, who first described this architecture in "A study of non-blocking switching networks", Bell System Technical Journal vol. 32, March 1953), a multi stage matrix with input and output (I/O) stages and a central matrix stage. A three-stage matrix for switching SDH signals is described for example in EP1596612. In order to allow non-blocking operation, the switching capacity of the center stage must be higher than the capacity of the I/O stages.

A third architecture for a switch matrix is the so-called sliced matrix, where signals prior to entering the switch matrix are "sliced" into a number of parallel part signals that can then be switched through different matrix chips in parallel. A sliced matrix design is described for example in EP1585358.

### Summary of the Invention

A problem of the invention is to provide a network node having an improved matrix architecture suitable for switching TDM traffic streams of different granularity and in particular traffic streams structured in accordance with different optical networking standards.

These and other objects that appear below are achieved by a new hybrid matrix architecture, where a sliced matrix for switching traffic signals at a lower granularity is additionally used as a center stage matrix in a multi-stage matrix architecture for switching of traffic signals at a higher granularity.

In particular, a hybrid network node, which serves time-division multiplexed transport signals of different multiplexing structure in accordance with at least two different transmission standards, has a sliced central switch matrix with a number of at least N (N>1) parallel switch modules. Each switch module is arranged for switching in space and time domain one of a number of N signal slices of an internal signal format. One or more slicer/deslicer pairs are connected to the central switch matrix for re-formatting received transport signals structured in accordance with a first transmission standard to and from internal signals sliced into groups of N signal slices having the internal signal format. In addition, one or more pairs of input/output stage matrices are provided for switching in space and time domain multiplex units of received transport signals structured in accordance with a second transmission standard and mapping the multiplexing units in groups of M (M> 1) into timeslots of the internal signal format having said N signal slices.

This architecture leads to a compact design while allowing to build higher capacity network nodes and reduces the amount of hardware required for network nodes of comparable capacity.

### Brief Description of the Drawings

Preferred embodiments of the present invention will now be described with reference to the accompanying drawings in which
- figure 1: shows a block diagram of a network node and its switch matrix;
- figure 2: shows the interconnections inside the network node;
- figure 3: shows the internal signal format used inside the network node; and
- figure 4: shows a block diagram of a network card with input and output stage switch matrices.

### Detailed Description of the Invention

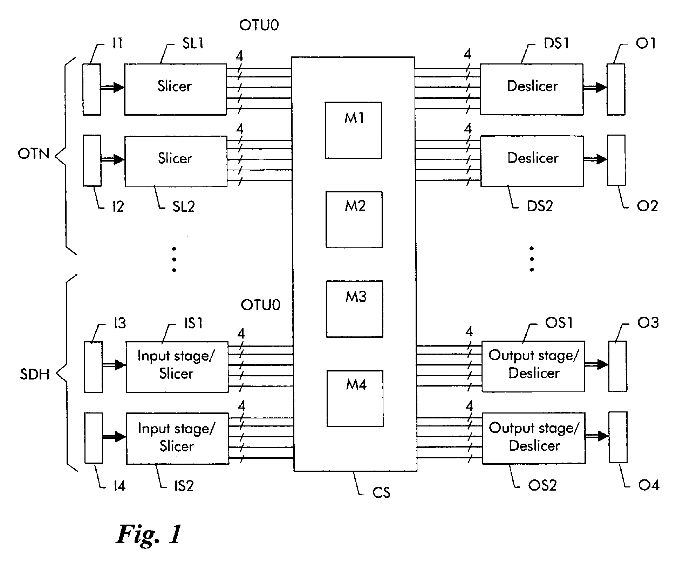

An embodiment of a network node NO is shown in figure 1. The network node NO has a number of input line cards I1-I4 and a number of output line cards O1-O4. Figure 1 shows by way of example 4 input and 4 output line cards. It should be understood that a network node in reality would have a higher number such as 32 I/O boards and that input and output ports, shown in figure 1 as separate line cards, are arranged on common I/O boards.

Network node NO is capable of handling and switching transmission signals in accordance with SDH standards as well as OTN standards in space and time domain. Therefore, a number of input line cards I1, I2 and output line cards O1, O2 is provided for receipt and transmission of signals in accordance with the OTN standards and another number of input line cards I3, I4 and output line cards 03, 04 is provided for receipt and transmission of signals in accordance with the SDH standards. A central switch matrix CS is provided for switching any of these signals.

Central switch matrix CS is designed as a sliced matrix with a number of matrix modules M1-M4, each handling a parallel signal slice of the same signal to be switched. The signal slices are structured in accordance with an internal signal format.

OTN input line cards I1, I2 are connected to slicers SL1, SL2, respectively. OTN output line cards O1, 02 are connected to deslicers DS1, DS2. SDH input line cards I3, I4 are connected to input stage switch matrices IS1, IS2, respectively. SDH output line cards 03, 04 are connected to output stage switch matrices OS1, OS2.

Slicers SL1, SL2 and deslicers DS1, DS2 as well as input stage switch matrices IS1, IS2 and output stage switch matrices OS1, OS2 are connected to central switch matrix CS via a backplane. In particular, each slicer/deslicer and input/output stage switch matrix is connected through a number of internal interconnections to each matrix module M1-M4 of center stage matrix CS.

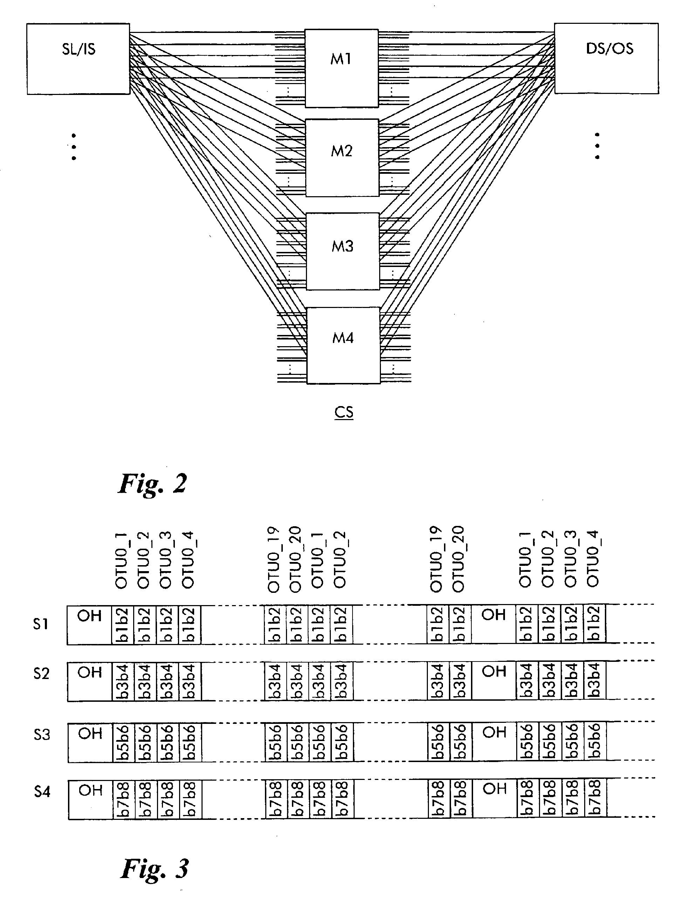

Figure 2 shows by way of example the interconnection between an input stage or slicer SL/IS and the matrix modules M1-M4 and the interconnections from matrix modules M1-M4 to a deslicer or output stage DS/OS. Each slicer or input stage SL/IS is connected via five independent backplane connections to each matrix module M1-M4 and each matrix module M1-M4 is connected via five independent backplane connections to each deslicer or output stage DS/OS.

In the embodiment, each input I1-I4 and each output O1-O4 line card represents a data capacity of 100 Gb/s. The interconnections between slicer/deslicer as well as input/output stages and the central switch matrix CS has a rate of 5 Gb/s, each. Each of the slicers SL1, SL2 and the input stage switch matrices IS1, IS2 provides to the central switch matrix five groups a four signal slices, each having a capacity of 5 Gb/s, which add to the total of 5 x 4 x 5 Gb/s = 100 Gb/s.

An example of an internal signal is shown in figure 3. Each of the 4 internal signal slices S1-S4 carries a fraction of 20 different OTU0 equivalents OTU0_1 - OTU0_20 arranged into 2-byte groups b1b2, b3b4, b5b6, b7b8. The term equivalents refers in this context to the fact that the individual traffic signals do not necessarily need to be OTU0 but rather defines the signal capacity and rate as those of or similar to OTUO. Timeslots of the internal signal format are adapted to carry OTU0 signals but can equally transport other signals in the form of OTU0 equivalents. For example, an OTU1 can be transported as 2 OTU0 equivalents and an OTU2 can be transported as 8 OTU0 equivalents.

The sliced internal signal is structured into frames with an overhead OH and a number of timeslots. Each timeslot is 2 bytes wide and carries data from one of the 20 OTU0 equivalents OTU0_1 - OTU0_20. After OTU0_20, the next two bytes of OTU0_1 follow and so on. The frame length of the internal frame format is such that all OTU0 bytes can be carried within one of the 20 sets of timeslots.

Since the data rates of OTN signals are asynchronous within certain limits, the internal frame structure also carries positive stuff opportunities to adapt the rates of the received signals to the internal signal rate at which the network node operates. Rate adaptation using positive bit stuffing is performed prior to entering the switch matrix on the I/O boards.

The central switch matrix CS has a net total switch capacity of 3,2 Tb/s, i.e. 32 x 100 Gb/s and switches signals in time and space domain in increments of OTU0 equivalents, i.e. in 1 Gb/s granularity. The network node NO can therefore house 32 slicer and/or input stage modules and 32 100Gb/s I/O boards. Each matrix module M1-M4 is a square matrix with 160 matrix inputs and outputs, i.e. a 160 x 160 square matrix.

Since the internal signals carry additional overhead OH, which needs to be switched through the central switch matrix CS, its overall switch capacity is 3,8 TB/s in this embodiment. Amongst others, the internal overhead allows forward error processing between input ports and output ports of the network node to eliminate any errors introduced through the node-internal transit. The principle of operation for switching of OTN signals is as in EP1585358. It should be understood that switching is not limited to OTU0 multiplexing entities, i.e. smallest multiplexing unit in OTN. As mentioned, OTU1 can be switched as two OTU0 equivalents, for example and OTU2 can be switched as 8 OTU0 equivalents etc.

The input and output stage switch matrices switch received SDH signals in increments of AU3, i.e. at 50Mb/s granularity. The output of the input stage matrices is 5 groups a 4 signals slices, each having 5 Gb/s net capacity. In the input stage module, AU3 timeslots are arranged in groups of 20 to form OTU0 equivalents, which can then be switched inside central switch matrix CS. The output signals of the input stage matrices have the same format as of the slicers, i.e. carry 20 OTU timeslots sliced into four internal signals of 5 Gb/s capacity carrying 2B groups of each OTU0 equivalent.

Similar to the switching of OTN signals in the center stage switch CS, the switching of SDH signals in the input and output stage matrices is not limited to AU3 multiplexing units. An AU4 can for example be switched as three AU3 equivalents. If the network node is only used for ETSI SDH, it would also be possible that the switching granularity of the input/output stage matrices is chosen to AU4.

The mode of operation for switching of SDH signals is similar to the operation of the crossconnect described in EP1596612. At an input stage matrix, an AU3 is switched to an output of that stage that will be interconnected through center stage switch CS to an output stage switch matrix, to which the destination output port is connected.

As described above, input ports and output ports can be arranged on common I/O boards. Likewise, the respective input stage and output stage matrices connected to that I/O board can also be arranged on a common input/output stage matrix board. Moreover, I/O board and corresponding input and output stage matrix board can be integrated on a common SDH network card.

In the same way, OTN I/O boards and corresponding slicer and deslicer can be integrated on a common OTN network card. This reduces the hardware modules to a central switch matrix, which can be implemented on a single matrix board or on several matrix boards and network cards for SDH and OTN signals respectively. All network cards and matrix boards can be plugged into a common shelf which provides the interconnections between the boards through a common backplane.

With the design described above, the hybrid OTN/SDH node can be equipped with up to 32 network cards with any possible mixture of SDH and OTN network cards.

As mentioned earlier, network cards have a capacity of 100 Gb/s user signals. This does, however, not mean that the design is limited to 100G network interfaces, as multiple I/O ports can be combined on a single network card. It should be understood that each network card can be equipped with different combinations of I/O ports, such as 2,5G, 10G, 40G, and combinations thereof.

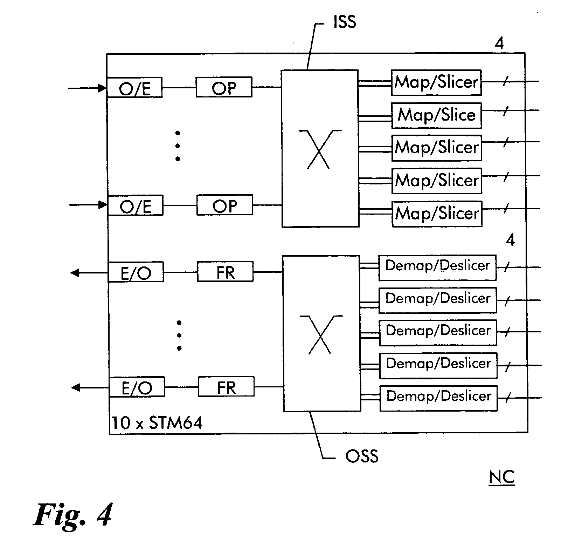

Figure 4 shows an embodiment of a network card NC accommodating I/O ports as well as input and output stage switch modules. The network card NC has optical input ports and output ports for 10 STM64 signals. An STM64 is a framed multiplex signal provided by the SDH standards (ITU-T G.707) and has a signal rate of approximately 10 Gb/s. Received STM64 signals are O/E converted and fed to an overhead processor OP, which terminates the section overhead and processes the AU pointers.

Processed STM64 signals are then fed to an input stage switch matrix ISS, which switches timeslots in AU3 granularity in time and space domain to any matrix output. As would be apparent to those skilled in the art, ESTI SDH does not provide AU3 multiplex entities but only AU4 entities, which have the size of three consecutive AU3. Therefore, an ETSI AU4 can be switches as three "virtual" AU3 to consecutive AU3 timeslots at the same output.

At the matrix output, the switched STM64 signals are fed in groups of 2 bytes to a mapper and slicer, which groups the AU3 timeslots into groups of 20 timeslots of the internal signal format. The network card NC has five sliced outputs towards central switch matrix CS, each having four signal slices respectively connecting one of the four central matrix modules M1-M4. As in figure 3, the internal signal format has 20 two-byte timeslots representing OTU0 equivalents. The mapper and slicer circuit maps into each of the OTU0 equivalents up to 20 AU3 timeslots from the STM64 format.

An STM64 has 64 AU4 corresponding to 192 AU3. The five sliced outputs have a capacity of 5 x 20 Gb/s and can carry up to 2000 AU3 equivalents in the 200 OTU0 timeslots. The network card NC can therefore handle up to 10 STM64. The remainder of the timeslots can be filled with overhead or control signals or left empty / filled with dummy data.

In order to support protection and multicast, it is preferred to handle less then 10 STM64 on a SDH network card. In order to have full flexibility, network card NC can for example handle 5 STM64, where each AU3 can be broadcasted to two outputs.

In the transmit direction, network card NC receives from central switch matrix CS five internal signals each having four signal slices. The slices signals are desliced and extracted by respective demapper circuits and forwarded as 10 STM64 signals to output stage switch matrix OSS, which switches AU3 equivalents from any input to any output in space and time domain. The matrix outputs are connected to framer circuits FR which add overhead bytes and format the signals for transmission. Optical transmitters E/O convert the formatted signals into optical signals for transmission into the optical network.

In addition to OTN and SDH network cards, the network node can have network cards for other traffic signals such as PDH signals or data signals such as Ethernet, MPLS, or IP. The network card can then include an Ethernet switch or IP routing instance and a mapper for mapping the traffic signals into internal timeslots.

Referring back to figure 3, a particular advantage of the above described matrix design becomes apparent. The internal signal carries 20 x OTU0 equivalents, which repeat cyclically in 2B groups. Each OTU0 equivalent can carry 20 AU3 equivalents, which hence also repeat cyclically in the internal signal. A switch matrix capable of switching AU3 equivalents would therefore need 20 x 20 = 400 storage locations for the individual AU3 equivalents, respectively. Since, however, the central switch matrix switches only OTU0 equivalents, it only needs 20 storage locations for the 20 OTU0 equivalents.

Storage locations for the AU3 equivalents are moved to the input/output stage switches and are therefore only provided for signals for which AU3 switching is required, i.e. on SDH network cards. The central switch matrix on the other hand does not need to provide such memory locations, which would be superfluous for OTN traffic. This makes chip design for the central switch matrix cheaper and more compact.

On the other hand, this does not increase chip design considerably for the input and output stage matrices, since slicer and deslicer, which are anyway needed, contain memory cells to a large extend anyhow.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A hybrid network node for switching time-division multiplexed transport signals having different multiplexing structure in accordance with at least two different transmission standards; comprising:
- a sliced central switch matrix (CS) comprising a number of at least N parallel switch modules (M1-M4) with N>1, each arranged for switching in space and time domain one of a number of N signal slices of an internal signal format;
- one or more slicer/deslicer pairs (SL1, DS1; SL2, DS2) connected to said central switch matrix (CS) for re-formatting received transport signals structured in accordance with a first transmission standard to and from internal signals sliced into groups of N signal slices having said internal signal format; and
- one or more pairs of input/output stage matrices (IS1, OS1; IS2, OS2) for switching in space and time domain multiplex units of received transport signals structured in accordance with a second transmission standard and mapping said multiplexing units in groups of M with M> 1 into timeslots of said internal signal format having said N signal slices.

2. A network node in accordance with claim 1, wherein said internal signal format has timeslots adapted in size to carry multiplexing units provided by said first transmission standard and wherein said central switch matrix (CS) is adapted to switch said timeslots in space and time domain.

3. A network node in accordance with claim 1, wherein said switch modules (M1-M4) of said center stage switch (CS) are square matrices.

4. A network node in accordance with claim 1, wherein said input stage matrices (IS1, IS2), said output stage matrices (OS1, OS2) and said center stage switch (CS) form a three stage Clos matrix.

5. A network node in accordance with claim 1, wherein said slicer/deslicer pairs (SL1, DS1, SL12, DS2) are respectively arranged on combined input/output network cards of a first type.

6. A network node in accordance with claim 1, wherein said pairs of input/output stage matrices (IS1, OS1; IS2, OS2) are arranged on combined input/output network cards (NC) of a second type.

7. A network node in accordance with claim 1, wherein said switch modules (M1-M4) are arranged on one or more matrix boards.

8. A network node in accordance with claims 5, 6, and 7, wherein said first type and second type network cards (NC) and said one or more matrix boards are inside a common shelf and where said network cards and said matrix boards are interconnected through a common backplane.

## Patentansprüche

1. Hybrider Netzwerkknoten zum Schalten von zeitgemultiplexten Transportsignalen mit. unterschiedlichen Multiplex-Strukturen gemäß mindestens zwei unterschiedlichen Übertragungsstandards, umfassend:
- Eine aufgeteilte zentrale Schaltmatrix (CS) mit einer Anzahl von mindestens N parallelen Schaltermodulen (M1-M4) mit N> 1, welche jeweils zum Schalten einer Anzahl von N Signal-Slices eines Internen Signaformats in einem Raum- und Zeltbereich ausgelegt sind;
- ein oder mehrere an die besagte zentrale Schaltmatrix (CS) angeschlossene Slicer/Deslicer-Paare (SL1, DS1; SL2, DS2) zum Reformatieren von empfangenen Transportsignalen, welche gemäß einem ersten Übertragungsstandard strukturiert sind, in Gruppen von N Signal-Slices, welche das besagte interne Signalformat aufweisen; und
- ein oder mehrere Paare von Eingangs-/Ausgangsstufen-Matrizen (IS1, OS1; IS2, OS2) zum Schalten von Multiplex-Einheiten von empfangenen Transportsignalen in einem Raum- und Zeitbereich, welche gemäß einem zweiten Übartragungsstandard strukturiert sind, und zum Abbilden der besagten Multiplexing-Einheiten In Gruppen von M, mit M> 1, in Zeitschlitze des besagten internen Signalformats mit den besagten N Signal-Slices.

2. Netzwerkknoten nach Anspruch 1, wobei das besagte interne Signalformat Zeitschlitze hat, welche In größenmäßig dazu geelgnet sind, von dem besagten ersten Übertragungsstandard bereitgestellte Multiplexing-Einheiten zu transportieren, und wobei die besagte zentrale Schaltmatrix (CS) für das Schalten der besagten Zeitschlitze in einem Raum- und Zeitbereich ausgelegt Ist.

3. Netzwerkknoten nach Anspruch 1, wobei die besagten Schaltermodule (M1-M4) des besagten zentralen Stufenschalters (CS) quadratische Matrizen sind.

4. Netzwerkknoten nach Anspruch 1, wobei die besagten Eingangsstufen-Matrizen (IS1, IS2), die besagten Ausgangsstufen-Matrizen (OS1, OS2) und der besagte Zentralstufenschalter (SC) eine dreistufige Clos-Matrix bilden.

5. Natzwerkknoten nach Anspruch 1, wobei die besagten Slicer/Deslicer-Paare (SL1, DS1, SL2, DS2) jeweils auf kombinierten Eingangs-/Ausgangs-Netzwerkkarten eines ersten Typs angeordnet sind.

6. Netzwerkknoten nach Anspruch 1, wobei die besagten Eingangs-/Ausgangsstufen-Matrizen (IS1, OS1; IS2, OS2) auf kombinierten Eingangs-/Ausgangs-Netzwerkkarten (NC) eines zweiten Typs angeordnet sind.

7. Netzwerkknoten nach Anspruch 1, wobei die besagten Schaltermodule (M1-M4) auf einer oder mehreren Matrixplatten angeordnet sind.

8. Netzwerkknoten nach den Ansprüchen 5, 6 und 7, wobei sich die besagten Netzwerkkarten (NC) des ersten und des zweiten Typs und die besagten ein oder mehreren Matrixplatten in einem gemeinsamen Shelf befinden, und wobei die besagten Netzwerkkarten und die besagten Matrixplatinen über eine gemeinsame Backplane miteinander verbunden sind.

## Revendications

1. Noeud de réseau hybride pour commuter des signaux de transport multiplexés par répartition dans le temps présentant une structure de multiplexage différente conformément à au moins deux normes de transmission différentes ; comprenant :
- une matrice de commutation centrale découpée (CS) comprenant un certain nombre d'au moins N modules de commutation parallèles (M1 à M4) avec N>1, chacun étant conçu pour commuter dans le domaine du temps et de l'espace une tranche de signal parmi un certain nombre de N tranches de signal d'un format de signal interne ;
- une ou plusieurs paires d'éminceur/déséminceur (SL1, DS1 ; SL2, DS2) connectées à ladite matrice de commutation centrale (CS) pour remettre en forme des signaux de transport reçus structurés conformément à une première norme de transmission vers et à partir de signaux internes découpés en groupes de N tranches de signal présentant ledit format de signal interne ; et
- une ou plusieurs paires de matrices d'étage d'entrée/sortie (IS1, OS1 ; IS2, OS2) pour commuter dans le domaine du temps et de l'espace des unités multiplexes de signaux de transport reçus structurés conformément à une deuxième norme de transmission et mapper lesdites unités de multiplexage dans des groupes de M avec M>1 dans des intervalles temporels dudit format de signal interne présentant lesdites N tranches de signal.

2. Noeud de réseau selon la revendication 1, dans lequel ledit format de signal interne présente des intervalles temporels dont la taille est adaptée pour transporter des unités de multiplexage fournies par ladite première norme de transmission et dans lequel ladite matrice de commutation centrale (CS) est adaptée pour commuter lesdits intervalles temporels dans le domaine du temps et de l'espace.

3. Noeud de réseau selon la revendication 1, dans lequel lesdits modules de commutation (M1 à M4) de ladite commutation de l'étage central (CS) sont des matrices carrées.

4. Noeud de réseau selon la revendication 1, dans lequel lesdites matrices d'étage d'entrée (IS1, IS2), lesdites matrices d'étage de sortie (OS1, OS2) et ladite commutation de l'étage central (CS) forment une matrice Clos à trois étages.

5. Noeud de réseau selon la revendication 1, dans lequel lesdites paires d'éminceur/déséminceur (SL1, DS1, S12, DS2) sont respectivement disposées sur des cartes réseau d'entrée/sortie combinées d'un premier type.

6. Noeud de réseau selon la revendication 1, dans lequel lesdites paires de matrices d'étage d'entrée/sortie (IS1, OS1 ; IS2, OS2) sont disposées sur des cartes réseau d'entrée/sortie combinées (NC) d'un deuxième type.

7. Noeud de réseau selon la revendication 1, dans lequel lesdits modules de commutation (M1 à M4) sont disposés sur une ou plusieurs cartes de matrice.

8. Noeud de réseau selon les revendications 5, 6 et 7, dans lequel lesdites cartes réseau de premier type et de deuxième type (NC) et lesdites une ou plusieurs cartes de matrice sont à l'intérieur d'un rayon commun où lesdites cartes réseau et lesdites cartes de matrice sont interconnectées par l'intermédiaire d'un fond de panier commun.
